# FASCICULE DE BREVET EUROPEEN

(11) **EP 1 247 709 B1**
(45) Date de publication et mention de la délivrance du brevet: **21.01.2009**
(21) Numéro de dépôt: 02290414.8
(22) Date de dépôt: 21.02.2002
(51) Int. Cl.: B60T 7/06, G05G 1/30, G05G 1/36

(54) **Fixation de pedalier**
Pedalbefestigung
Fastening of a pedal

(30) Priorité: 29.03.2001 FR 0104265
(43) Date de publication de la demande: 09.10.2002
(73) Titulaire: Peugeot Citroën Automobiles SA, 92200 Neuilly sur Seine (FR)
(72) Inventeur: Gruel, Vincent, 35650 Le Rheu (FR)
(74) Mandataire: Robert, Jean-François

(56) Documents cités:
- EP-A- 0 629 939
- DE-A- 4 230 980
- GB-A- 2 344 156
- US-A- 3 714 780

## Description

L'invention se rapporte à un procédé de fixation d'un pédalier sur une surface en général et plus particulièrement sur le tablier d'un véhicule automobile.

Dans un procédé de montage, il est connu de disposer de coefficients d'erreur afin de vérifier si un montage est conforme audit procédé. Ces coefficients numériques sont généralement présentés précédés du symbole "±" et suivis de l'unité rattachée à l'écart de mesure autorisé par le procédé. Car sur une ligne de montage, il est fréquent d'avoir des différences de dispersions parmi les différentes pièces montées, ainsi lorsque ces dispersions ne dépassent pas les coefficients d'erreur, les pièces sont dites conformes.

Il est connu, également, pour le montage d'un pédalier d'un véhicule automobile, d'utiliser une fixation hyperstatique, c'est-à-dire à plus de trois points. En effet, les efforts importants exercés par le conducteur sur les pédales, surtout lors du freinage, nécessitent un pédalier comportant quatre ou cinq points de fixations sur la surface qui le supporte. Cette fixation hyperstatique permet ainsi de mieux répartir les efforts d'une éventuelle poussée brutale sur une des pédales et donc de ne pas détériorer le pédalier.

Ces pédaliers à fixation hyperstatique ont cependant l'inconvénient d'être très difficiles à mettre en oeuvre sur des lignes de montage de véhicules automobiles. En effet, la surface sur laquelle est monté le pédalier, appelé communément le "tablier", résulte d'un empilement de quatre voire cinq tôles solidarisées (souvent à l'aide de soudures par point). Cet empilement induit donc quatre à cinq fois plus de dispersions qu'une surface en tôle simple. Cela entraîne donc des cotes de fixation du pédalier plus éparses que sur une surface en tôle simple.

Par conséquent du fait des dispersions qu'ils doivent prévoir, les procédés de montage du pédalier sur le tablier d'un véhicule automobile, utilisant un ensemble vis - écrou à cinq points, n'autorisent une fixation aisée et sure que des quatre premiers points de fixation et rallonge le temps de montage par les difficultés rencontrées lors de la fixation du cinquième point.

La présente invention a pour but de pallier les inconvénients de l'art antérieur précédemment cités.

A cet effet, l'invention concerne un procédé de fixation d'un pédalier sur une surface munie d'une aire d'appui comprenant les étapes consistant à :
- fixer sur la surface au moins trois goujons décalés par rapport à l'aire d'appui,
- poser le pédalier, contenant la vis d'un ensemble vis-écrou frein, en coopérant avec lesdits goujons,
- serrer sur chaque goujon un écrou afin de fixer le pédalier par rapport à ladite surface,
- mettre en place sur ladite vis l'écrou frein associé,
- appliquer un couple à l'écrou frein
caractérisé en ce que l'étape consistant à appliquer un couple audit écrou frein permet consécutivement de :
- mettre en butée la vis contenue sur le pédalier contre ladite aire d'appui,
- serrer l'écrou frein sur le pédalier afin d'uniformiser le positionnement de la butée par rapport aux dispersions induites lors du ferrage.

Le montage du pédalier est ainsi réalisé plus rapidement par rapport au procédé cité dans l'art antérieur grâce à une unique étape permettant consécutivement d'adapter la cinquième fixation aux dispersions dues à l'empilement de plusieurs tôles lors du ferrage et de mettre en butée ledit cinquième point du pédalier sur ladite surface.

Avantageusement, la vis dudit ensemble vis - écrou frein comporte sensiblement à une de ces extrémités une butée permettant à l'écrou frein associé de servir successivement de moyen de préhension puis de moyen de serrage.

En outre selon l'invention, ladite butée est, avantageusement, de forme annulaire pour répartir plus uniformément les forces lors de la mise en butée sur ladite surface.

D'autres particularités et avantages apparaîtront à la lecture de la description ci-après faite en référence aux figures dans lesquelles :
- la figure 1 représente une vue de face, selon l'invention, de la surface après l'étape de fixation des quatre goujons ;
- la figure 2 est une vue de face, selon l'invention, de la surface après l'étape de pose du pédalier en coopérant avec lesdits quatre goujons ;
- la figure 3 représente une vue de gauche, selon l'invention, de la partie inférieure de la surface après l'étape de pose du pédalier ;
- la figure 4 est une vue de face, selon l'invention, de la surface après les étapes de serrage sur chaque goujon d'un écrou et de mise en place de l'écrou frein ;
- la figure 5 est une vue de gauche, selon l'invention, de la partie inférieure de la surface après l'étape de mise en butée de la vis contre l'aire d'appui ;
- la figure 6 est une vue de face, selon l'invention, de la surface après l'étape de serrage de l'écrou frein sur le pédalier.

Dans les figures numérotées de 1 à 6, la surface sur laquelle le procédé est appliqué est la partie avant droite de l'habitacle d'un véhicule automobile. Ainsi les étapes de l'invention qui sont présentées sont celles d'un montage de pédalier d'un véhicule automobile équipé pour une conduite à droite.

Les différentes étapes du procédé selon l'invention peuvent être réalisées dans les usines terminales d'un centre de production de véhicules automobiles. Ainsi, on peut distinguer quatre grandes étapes que sont l'emboutissage, le ferrage, la peinture et le montage.

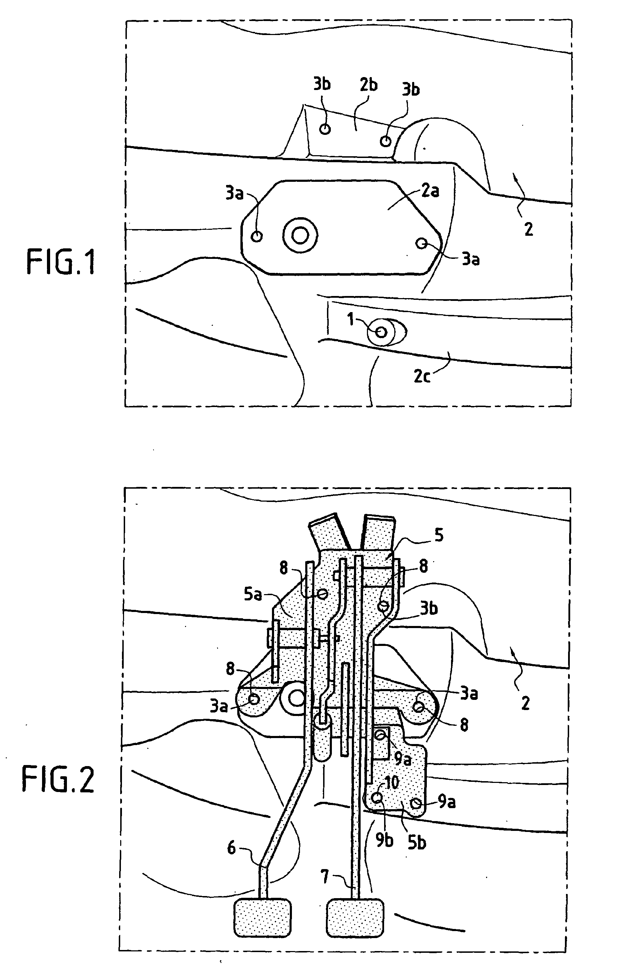

Lors de l'emboutissage, des tôles planes sont compressées pour les déformer de manière à obtenir des pièces spécifiques comme c'est le cas de la pièce comportant l'aire d'appui (1) annulaire illustrée à la figure 1.

Ces différentes tôles étant formées, elles passent alors au ferrage qui permet de les solidariser entre elles et ainsi de former la "caisse" du véhicule automobile. C'est à ce stade que la surface (2), illustrée à la figure 1, est fabriquée par l'assemblage de plusieurs pièces de tôles préformées comme celle qui comporte l'aire d'appui (1). C'est aussi à ce stade, selon la première étape du procédé selon l'invention, que les quatre goujons (3) sont fixés sur la surface (2) avec un positionnement sensiblement trapézoïdal et décalé par rapport à l'aire d'appui (1). Lesdits quatre goujons pouvant être solidarisés par exemple par soudure sur la surface (2).

Après le ferrage, la "caisse" est envoyée à la peinture. Elle est alors totalement immergée dans un bain ionique où elle subit une cataphorèse. Ce traitement de surface permet de déposer une fine couche destinée à lutter contre l'oxydation des pièces en acier. Enfin, les parois extérieures de la caisse sont peintes.

La figure 1 représente donc l'état de la surface (2) juste avant que la "caisse" n'arrive au stade du montage. On peut voir que la surface (2) a un relief comprenant trois plans de profondeurs différentes (2a, 2b, 2c). Au dernier plan (2a) de la surface (2) sont fixés les deux premiers goujons (3a) qui forment la grande base du positionnement sensiblement trapézoïdal. Sur le plan médian (2b) figurent les deux autres goujons (3b) qui peuvent être assimilés à la petite base du positionnement sensiblement trapézoïdal. Enfin au premier plan (2c) de la surface (2) on peut voir l'aire d'appui (1) annulaire, plane et sensiblement verticale.

La deuxième étape du procédé selon l'invention consiste à poser le pédalier (5) contre la surface (2) en coopérant avec les goujons (3). Dans l'exemple illustré à la figure 2, on voit que le pédalier (5) monobloc comporte une partie supérieure (5a) et une partie inférieure (5b).

La partie supérieure (5a) comprend déjà la pédale d'embrayage (6), la pédale de frein (7) et les quatre trous (8) sensiblement positionnés sous une forme trapézoïdale correspondante aux quatre goujons (3) contenus sur la surface (2). La partie inférieure (5b) du pédalier (5) comporte trois trous (9a, 9b) taraudés dont deux (9a) ont pour but de fixer la pédale d'accélérateur (non représentée).

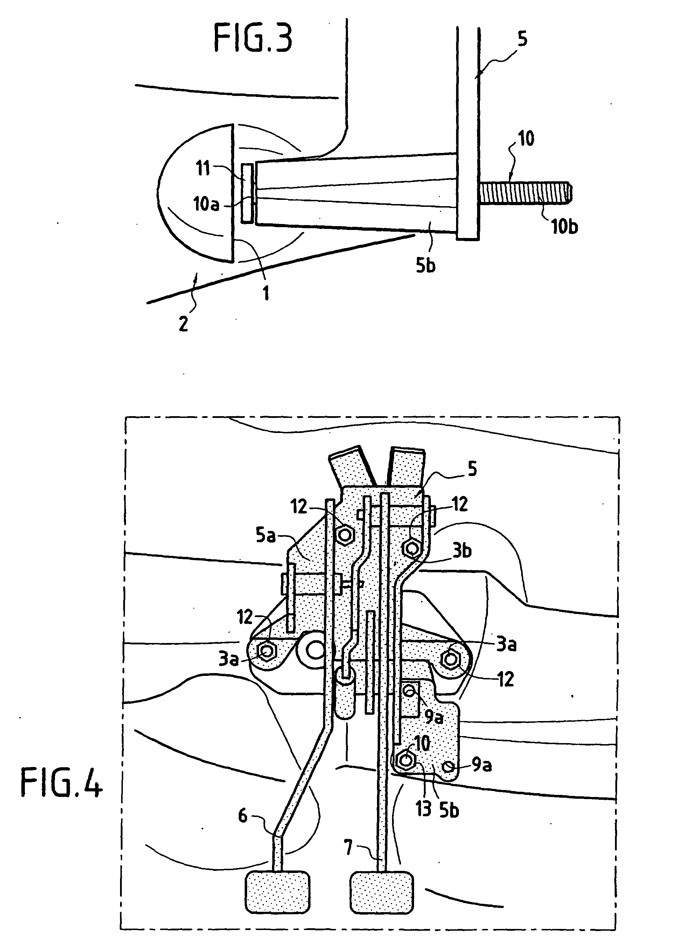

Lors de ladite étape de pose du pédalier (5), la partie inférieure (5b) de ce premier comporte déjà la vis (10) d'un ensemble vis-écrou frein. En effet, la partie inférieure (5b) du pédalier (5) possède un troisième trou (9b) taraudé dans lequel vient coopérer, comme dans l'exemple illustré à la figure 3, une vis (10) dont les deux extrémités (10a, 10b) sortent chacune d'un côté de la partie inférieure (5b) du pédalier (5).

La première extrémité (10a) sort face à la surface (2). Cette extrémité (10a) illustrée à la figure 3 est terminée par une butée (11) annulaire. Lors de la pose du pédalier (5), l'anneau est en butée contre la face de la partie inférieure (5b) du pédalier (5) qui est en vis-à-vis avec la surface (2).

La deuxième extrémité (10b) de la vis (10) illustrée à la figure 3 sort de la partie inférieure (5b) du pédalier (5) d'une longueur sensiblement égale au tiers de sa longueur totale.

Ainsi dans cette deuxième étape du procédé selon l'invention, on fait correspondre les quatre trous (8) de la partie supérieure (5a) du pédalier (5) aux quatre goujons (3) fixés sur la surface (2) et on pousse le pédalier (5) de manière à guider ledit pédalier contre ladite surface. Sur la figure 3, on remarque que la butée (11) annulaire située à l'extrémité (10a) de la vis (10) ne touche pas la surface (2) mais fait cependant vis-à-vis avec l'aire d'appui (1) annulaire.

La troisième étape consiste à serrer un écrou (12) sur chacun des goujons (3). Cette étape étant notoire sur les lignes de montage, une description détaillée est inutile, cependant, il est à noter que lesdits écrous sont du type auto-nettoyeurs pour permettre de bien dégager le filet de chacun des goujons (3) en surface desquels a pu être déposée lors de l'électrophorèse une couche anti-corrosion trop épaisse. Dans l'exemple illustré à la figure 4, on peut voir les quatre écrous (12) serrés contre le pédalier (5) de manière à fixer ce dernier contre la surface (2).

La quatrième étape du procédé selon l'invention consiste à mettre en place sur la vis (10) un écrou frein (13) associé. Avantageusement, la tête dudit écrou frein est de même forme et du même diamètre que ceux des écrous (12) précédemment cités de sorte que la partie utile de la visseuse, c'est-à-dire la partie correspondante avec lesdites têtes d'écrous, puisse être utilisée pour le serrage du premier (13) ou des quatre autres (12). Dans l'exemple illustré à la figure 4, l'écrou frein (13) de forme hexagonale vient d'être mis en place, selon l'invention, sur la partie de la vis (10) faisant saillie sur la partie inférieure (5b) du pédalier (5).

La cinquième étape du procédé selon l'invention consiste à appliquer un couple sur ledit écrou frein (13). Avantageusement selon l'invention, le procédé ne change pas le schéma de montage de l'art antérieur. En effet, l'opérateur visse cinq écrous comme avant. Cependant, le cinquième point n'est plus une fixation mais une butée. Le vissage par l'opérateur de l'écrou frein (13) sur l'extrémité (10b) de la vis (10) faisant saillie sur la partie inférieure (5b) induit trois étapes successives dans lesquelles le même opérateur ne joue pas de rôle.

Dans un premier temps, le couple appliqué sur l'écrou frein (13) va faire correspondre ce dernier au pas de la vis (10). Dans un deuxième temps, le couple nécessaire pour faire tourner la vis (10) par rapport à la partie inférieure (5b) du pédalier (5) étant plus faible que celui nécessaire pour faire tourner l'écrou frein (13) par rapport à la vis (10), va obliger cette dernière (10) à tourner par rapport à ladite partie inférieure par transmission du couple au travers de l'écrou frein (13).

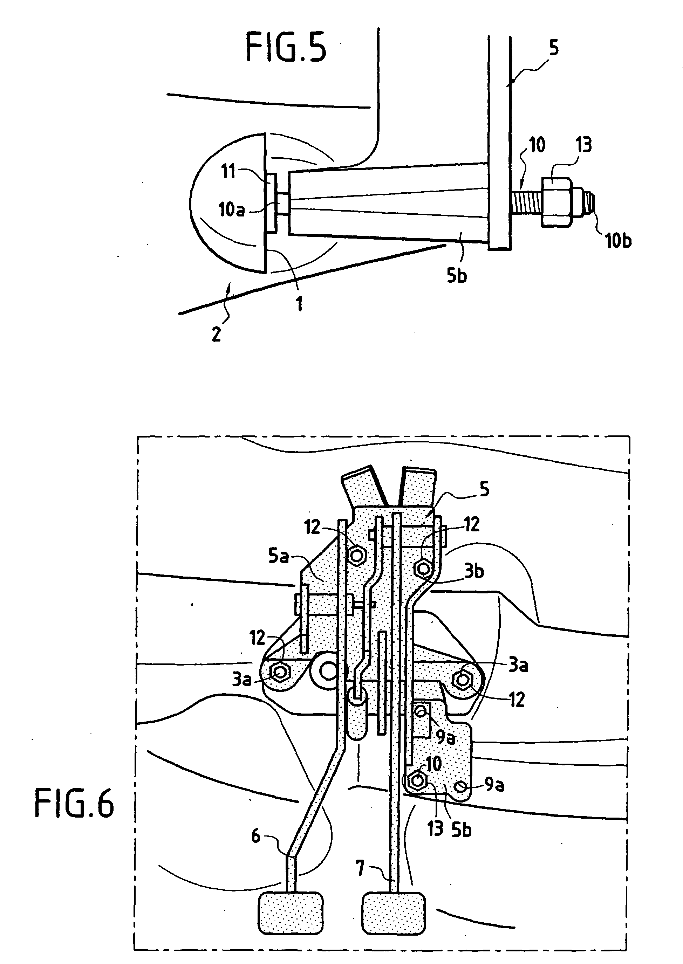

En effet, le mouvement exécuté en premier étant celui demandant le moins de couple, l'écrou frein (13) va en fait servir de moyen de préhension pour permettre à la vis (10) de suivre le filetage du troisième trou (9b) taraudé que comporte la partie inférieure (5b) du pédalier (5). Le premier mouvement permet donc de déplacer la butée (11) qui est à l'extrémité (10a) de la vis (10) vers la surface (2) jusqu'à y être mis en butée en coopérant avec l'aire d'appui (1) annulaire, plane et sensiblement verticale. Dans l'exemple illustré à la figure 5, on voit bien l'extrémité (10a) annulaire de la vis (10) qui est en butée avec ladite aire. Cette cinquième étape du procédé selon l'invention permet donc dans un deuxième temps d'adapter le cinquième point de la fixation aux dispersions induites par l'empilement de plusieurs tôles au moyen desquelles est fabriquée la surface (2).

A partir de cette mise en butée, le couple nécessaire pour tourner la vis (10) par rapport à la partie inférieure (5b) du pédalier (5) va devenir plus important que celui nécessaire pour faire tourner l'écrou frein (13) par rapport à la vis (10). Par conséquent, ce couple va, dans un troisième temps, servir à serrer l'écrou frein (13) contre la partie inférieure (5b) du pédalier (5) et donc à offrir le cinquième point nécessaire aux caractéristiques mécaniques désirées du pédalier (5) lors d'une forte sollicitation sur une des pédales. Dans l'exemple illustré à la figure 6, on voit le pédalier (5) monté selon l'invention contre la surface (2).

Le procédé selon l'invention autorise donc le montage aisé et sûr des cinq points d'une fixation hyperstatique de manière à limiter le temps de montage d'un pédalier sur une surface.

Bien entendu, l'invention ne se limite pas aux véhicules automobiles en général ni aux véhicules automobiles équipés pour une conduite à droite en particulier. On peut également imaginer que la fixation hyperstatique ne soit pas limiter à une seule butée mais en contienne plus. Enfin, on peut imaginer que la butée (11) ou l'aire d'appui (1) ait chacune une forme différente.

Enfin, on peut encore gagner du temps sur ce procédé par exemple en réunissant les deux étapes, respectivement de mise en place de l'écrou frein (13) et de transmission de couple. Il suffit de placer l'écrou frein (13) dans l'élément utile de la visseuse correspondant à la forme de la tête de l'écrou frein (13) et de plaquer cet élément contre la vis (10) tout en actionnant la visseuse. On peut gagner du temps également en fournissant le pédalier (5) sur la ligne de montage muni directement de la vis (10) et de l'écrou frein (13). L'opérateur n'a alors plus qu'à visser dans l'ordre les quatre écrous (12) auto-nettoyeurs et l'écrou frein (13) à l'aide de la même visseuse. Cependant, cet approvisionnement de l'écrou frein (13) n'a pas été retenu car il a occasionné lors de simulations des mauvais montages. En effet, si l'opérateur serre en premier l'écrou frein (13), le serrage des autres écrous (12) va plier le pédalier (5) et l'empêcher de fonctionner correctement. A ce titre, le procédé permet le montage plus rapide et plus aisé d'un pédalier par rapport à l'art antérieur tout en évitant les erreurs de montage.

## Revendications

1. Procédé de fixation d'un pédalier (5) sur une surface (2) munie d'une aire d'appui (1) comprenant les étapes consistant à:
- fixer sur la surface (2) au moins trois goujons (3) décalés par rapport à l'aire d'appui (1),
- poser le pédalier (5), contenant la vis (10) d'un ensemble vis-écrou frein, en coopérant avec lesdits goujons (3),
- serrer sur chaque goujon (3) un écrou (12) afin de fixer le pédalier (5) par rapport à ladite surface (2),
- mettre en place sur ladite vis l'écrou frein (13) associé,
- appliquer un couple sur l'écrou frein (13)
**caractérisé en ce que** l'étape consistant à appliquer un couple audit écrou frein permet consécutivement de :
- mettre en butée la vis (10) contenue sur le pédalier (5) contre ladite aire d'appui (1),
- serrer l'écrou frein (13) sur le pédalier (5) afin d'uniformiser le positionnements de la butée (11) par rapport aux dispersions induites lors du ferrage.

## Claims

1. Method of attaching a pedal box (5) to a surface (2) equipped with a support area (1), involving the steps that consist in:
- attaching to the surface (2) at least three studs (3) that are offset with respect to the support area (1),
- fitting the pedal box (5) containing the screw (10) of a screw-locknut assembly to collaborate with the said studs (3),
- tightening a nut (12) onto each stud (3) in order to secure the pedal box (5) relative to the said surface (2),
- fitting the associated locknut (13) onto the said screw,
- applying torque to the locknut (13),
**characterized in that** the step consists in applying torque to the said locknut makes it possible in turn to:
- bring the screw (10) contained in the pedal box (5) into abutment against the said support area (1),
- tighten the locknut (13) onto the pedal box (5) so as to regularize the positioning of the stop (11) with respect to the spread introduced during fitment.

## Patentansprüche

1. Verfahren zur Befestigung einer Pedalanordnung (5) an einer mit einer Stützfläche (1) versehenen Fläche (2) mit den folgenden Schritten:
- Befestigen mindestens dreier Bolzen (3), die bezüglich der Stützfläche (1) versetzt sind, an der Fläche (2),
- Anordnen der Pedalanordnung (5), die die Schraube (10) einer Schrauben-Sicherungsmutter-Anordnung enthält, unter Zusammenwirkung mit den Bolzen (3),
- Festziehen einer Mutter (12) auf jedem Bolzen (3), um die Pedalanordnung (5) bezüglich der Fläche (2) zu befestigen,
- Anordnen der zugehörigen Sicherungsmutter (13) auf der Schraube,
- Anlegen eines Drehmoments an die Sicherungsmutter (13),
**dadurch gekennzeichnet, dass** der Schritt, der aus dem Anlegen eines Drehmoments an die Sicherungsschraube besteht, aufeinander folgend Folgendes gestattet:
- Anlegen der an der Pedalanordnung enthaltenen Schraube (10) an die Stützfläche (1),
- Festziehen der Sicherungsschraube (13) an der Pedalanordnung (5), um die Positionierung des Anschlags (11) bezüglich der bei der Montage eingeführten Streuungen einheitlich zu machen.
